(19) Europäisches Patentamt

European Patent Office

Office européen des brevets

(11) Publication number: **0 378 890 B1**

## EUROPEAN PATENT SPECIFICATION

(45) Date of publication of patent specification: **04.08.93**

(51) Int. Cl.5: **C09D 11/02**

(21) Application number: **89300500.9**

(22) Date of filing: **19.01.89**

(54) **Ink composition for lithography and methods of printing therefrom.**

(43) Date of publication of application:
**25.07.90 Bulletin 90/30**

(45) Publication of the grant of the patent:
**04.08.93 Bulletin 93/31**

(84) Designated Contracting States:
**DE ES FR GB**

(56) References cited:
**US-A- 3 881 942**

**DATABASE WPIL, no. 87-059910, Derwent Publications Ltd, London, GB; & JP-A-62 013 386**

(73) Proprietor: **SAKATA INKUSU KABUSHIKI KAISHA**
**Minamimorimachi Chuo Building 2-6-2, Higashi-tenma Kita-ku**
**Osaka-shi Osaka(JP)**

(72) Inventor: **Fukazawa, Akeru**
**89-6-14-109, Oaza Oeda**
**Kasukabe-shi Saitama-ken(JP)**
Inventor: **Isoda, Yutaka**
**1411-38, Kamihanawa**
**Noda-shi Chiba-ken(JP)**
Inventor: **Hashimoto, Yasuhiro**
**134-12-912, Toyofuta**
**Kashiwa-shi Chiba-ken(JP)**
Inventor: **Hisayasu, Sadao**
**3-10-308, Narashinodai 3-chome**
**Funbashi-shi Chiba-ken(JP)**
Inventor: **Yoshida, Koichiro Sakata Inkusu Kabushikikaisha Abikoryo 6-5, Hakusan 1-chome**
**Abiko-shi Chiba-ken(JP)**

(74) Representative: **Gaunt, Robert John et al**
**Stevens, Hewlett & Perkins 1 Serjeants' Inn**
**Fleet Street**
**London EC4Y 1LL (GB)**

Rank Xerox (UK) Business Services
(3. 10/3.6/3.3. 1)

## Description

This invention relates to an ink composition for lithography, especially for waterless lithography which makes it possible to print from a lithographic printing plate with one fluid without using any kind of fountain system to mask a non-image area of the lithographic printing plate and also to methods of printing therefrom.

In lithographic printing that uses the property of oil based ink and water to repeal each other, a printing plate comprising lipophilic image areas and hydrophilic (water receptive) non-image areas is provided with a fountain solution and oil based ink (two fluid printing), whereupon oil based ink adheres only to the image areas and is transferred to a printing material. But the feeding control of fountain solution and oil based ink is very difficult and requires much skill and improper control results in various problems such as scumming and greasing, due to emulsification, poor halftone reproduction, low gloss and piling phenomena buildup due to low water resistance of paper.

To solve these problems of the conventional lithographic printing technique using a fountain solution and to provide printed matter of good quality by efficient printing operation, many studies have been made on the technique of waterless lithography and some of them are being used on a commercial scale. In waterless lithography, generally, a waterless lithographic plate of which non-image area is formed a silicone-based low adhesion layer having small surface energy to prevent the adhesion of oil based ink to the non-image areas whereas of which image area is formed a lipophilic layer (see USP 3,511,178) is used in printing operation.

When a printing operation is continuously performed for a long time on said waterless lithographic plate, using an ordinary lithographic ink, the plate temperature is elevated and the ink becomes affixed to the non-printing area, thereby contaminating the ground. Hence, there is a demand for an ink specially designed for waterless lithographic printing.

The conventional designs of printing ink for waterless lithography aim at preventing the adhesion of ink to non-image areas either by increasing the tackiness of ink (hence increasing the cohesive force between ink particles) (see, for example, Japanese Patent Publication No. 32962/74), or by adding organopolysiloxane or the like to ink (see Japanese Patent Publication No. 11287/75) or using a silicone modified resin as an ink vehicle (see Japanese Patent Public Disclosure (Laid-Open) Nos. 10124/76, 22405/76, 10041/77, 10042/77 etc.).

Proposals have also been made for an ink containing, as a varnish component, a thermal reaction product which is modified from a phenol resin using an acid-modified copolymer from a dicyclopentadiene and drying oil (see Japanese Patent Public Disclosure (Laid-Open) No. 117568/84).

The first type of ink is not effectively transferred from the roller or blanket to a printing material. In addition, the levelling of ink on a printing material is poor and provides low gloss. In addition to these defects, the second type of ink forms an ink film of low surface energy on a printing material, so ink trapping on previously printed ink layer is not sufficient in multicolor printing, or overcoating using a coating composition.

Another defect of the ink of the first type is that, although so-called scumming or greasing does not form much in the non-image areas (i.e. background) when the temperature of the printing plate is low at press start-up, when the plate temperature increases during continued printing or in hot summer season, excessive scumming or greasing is observed.

An ink that is modified from a phenol resin using a dicyclopentadiene-drying oil copolymer has insufficient ground contamination resistance unless its cohesive force is raised with the use of metal chelates or metal soap. However, when the cohesive force is raised, the problem described above is inevitably encountered.

Furthermore, in conventional design of printing ink for waterless lithography, it has been proposed that a material selected from the group consisting of esters, ethers, aldehydes, ketones, alcohols and a mixture thereof be added to the printing ink. However, it does not provide good printing properties for waterless lithography (see Japanese Patent Public Disclosure (Laid-Open) No. 121807/79).

Also, since printing inks for conventional waterless lithography are designed to be used exclusively with a waterless lithographic plate, in many cases they failed to exhibit satisfactory printing properties when applied to a conventional lithographic printing operation employing a fountain solution. There has therefore been a demand for a printing ink that can be applied to both types of printing system.

It is an object of the invention, therefore, to provide an ink composition for lithography, especially for waterless lithography that has good printing properties, particularly good transfer to a printing material, and which provides printed matter with high gloss.

It is another object of this invention to provide an ink composition that has good printing properties when used in both waterless lithography and conventional lithography.

It is the other object of this invention to provide method of printing by using the ink composition for waterless lithography that has good printing properties, particularly good transfer to a printing material, and which provides printed matter with high gloss.

Other objects and advantages of the present invention may become apparent to those skilled in the art from the following description and disclosure.

The present invention provides an ink composition (Claim 1) for lithography wherein a polybutadiene modified resin is contained in an amount of 2 to 40 wt.% as a varnish component in the ink composition, said polybutadiene modified resin being produced by polymerization of polybutadiene in a resin solution under-mentioned under heating, 5 to 50 parts by weight of polybutadiene or modified polybutadiene having a number average molecular weight of 100 to 100,000, said modified polybutadiene being selected from the group consisting of maleinated polybutadiene, epoxidated polybutadiene and acrylated polybutadiene, with 100 parts by weight of at least one resin selected from the group consisting of rosin modified phenol resin, rosin ester resin, rosin modified maleic acid resin, alkyd resin and hydrocarbon resin.

Further, the invention relates to an ink composition (Claim 3) for lithography consisting essentially of, in addition, a member selected from the group consisting of an aliphatic acid ester, an aliphatic dibasic acid ester, a phosphoric acid ester and a mixture thereof, said member having boiling point higher than 200°C, a coagulating point below -5°C.

Furthermore, this invention is to provide method of printing by using the ink composition according to Claims 1 and 3.

The present invention will be explained in detail hereinbelow.

According to the present invention, liquid polybutadiene having a number average molecular weight of 100 to 10,000 and a viscosity of 2 to 60,000 poise at 30°C may be employed as the polybutadiene. For example, liquid butadiene rich in vinyl bonds (1,2-bonds) obtained with the assistance of alkali metal compounds acting as a catalyst is most preferred. Further, a liquid polybutadiene rich in 1,4-bonds, or a mixture thereof with the first stated liquid polybutadiene, may also be employed.

If a polybutadiene with a number average molecular weight of not more than 100 is used, adequate polymerization cannot be achieved, and the ground contamination temperature cannot be raised. In addition, the product will emit too strong an odor. If a polybutadiene with a number average molecular weight of not less than 10,000 is used, the polymerization product has an excessively high viscosity and ink prepared therefrom has inferior transfer properties.

Modified polybutadiene may also be employed. Examples of modified polybutadienes include maleinated polybutadiene obtained upon addition of $\alpha,\beta$-unsaturated dicarboxylic acids, such as maleic acid, or anhydrides thereof, or esterified products thereof. As typical example of the preferred modification degree of maleic anhydride would be addition of about 0.3 to 3.5 mol of maleic anhydride in 1 mol of polybutadiene.

Acrylated polybutadiene, obtained by addition of an $\alpha,\beta$-unsaturated monocarboxylic acid, such as acrylic acid, to polybutadiene, may also be used. A typical example of the preferred modification degree of the acid would be addition of about 1.0 to 2.0 mol of the acid to one mol of polybutadiene.

Epoxidated polybutadiene, obtained by causing an organic peroxide to react with polybutadiene may also be employed. Most preferred is a modification degree of 2.0 to 9.5 mol to 1 mol of polybutadiene.

The rosin-modified phenol resins, rosin ester resins, rosin-modified maleic acid resins, alkyd resins, including oil-modified and rosin-modified products and hydrocarbon resins, employed in the present invention are usually employed in printing inks for lithography as varnish components, these resins being usable. Above all, these resins preferably have a number average molecular weight of not more than 100,000 from the viewpoint of gloss characteristics.

A method of producing modified polybutadiene resins will now be explained.

Polybutadiene, at least one resin selected from the group consisting of rosin-modified phenol resins, rosin ester resins, rosin-modified maleic acid resins, alkyd resins and hydrocarbon resins and solvent and, as the case may be, a vegetable oil, are charged simultaneously into a vessel and heated. After the components have dissolved, a polymerization initiator is added to the reaction system when occasion demands to cause polymerization reaction of polybutadiene in said resin solution under heating, to produce a modified polybutadiene resin.

The amount of polybutadiene in the modified resin is preferably at least 5 parts by weight and no more than 50 parts by weight to 100 parts by weight of the resins that are to co-exist with polybutadiene. If the amount of polybutadiene is less than 5 parts by weight, the desired effects will not be obtained. If the amount of polybutadiene is more than 50 parts by weight, the transfer and gloss characteristics will be undesirably affected.

It is essential for polymerization of polybutadiene to occur during the heating reaction that takes place in the presence of the other resins. The desired effects are not obtained with an ink that contains a varnish produced by simply mixing polybutadiene with other resin components. It is to be noted that sufficient adaptability to waterless lithographic printing may be achieved with the polybutadiene modified resins of the present invention without any need to perform gellation with a view to increasing the cohesive force of the ink by using metal chelates or metal soap. However, it is also possible to perform such gellation so long as the gloss or transfer characteristics of the ink are not thereby impaired.

Any polymerization initiator may be employed as the radical polymerization initiator, and the present invention is not limited in this respect.

If the content of the thus obtained polybutadiene modified resin in the ink is less than 2 wt.%, the desired effects will not be achieved, while if the content is 40 wt.% or more, the resulting ink will become inferior in fluidity or present excessive tackiness, which is not desirable from the viewpoint of printing adaptability. The polybutadiene-modified resins can be used in admixture with other resin varnishes without in any way detracting from the effects provided by the resins, while the resins can also be used after cooking together with other resin varnishes.

Further, the invention relates to an ink composition (Claim 3) for lithography additionally containing a member selected from the group consisting of an aliphatic acid ester, an aliphatic dibasic acid ester, a phosphoric acid ester and a mixture thereof, said member having a boiling point higher than 200°C, and a coagulating point below -5°C.

Such esters to be used in this invention must be satisfied with the conditions above, otherwise they are regarded as unacceptable because of their poor printing properties and the like. Effective esters include hexyl butyrate, heptyl butyrate, octyl butyrate, amyl valerate, hexyl valerate, heptyl valerate, octyl valerate, butyl caproate, amyl caproate, hexyl caproate, heptyl caproate, octyl caproate, propyl heptylate, butyl heptylate, amyl heptylate, hexyl heptylate, heptyl heptylate, octyl heptylate, ethyl caprylate, propyl caprylate, butyl caprylate, amyl caprylate, hexyl caprylate, heptyl caprylate, octyl caprylate, methyl pelargonate, ethyl pelargonate, methyl caproate, ethyl caproate, octyl caproate, ethyl oleate, propyl oleate, butyl oleate, amyl oleate, heptyl oleate, olaidic methyl, elaidic ethyl, elaidic propyl, elaidic butyl, elaidic amyl, dibutyl oxalate, dibutyl malonate, diethyl succinate, dibutyl succinate, diethyl azelate, dibutyl sebacate, diocyl sebacate, dimethyl maleate, diethyl maleate, dipropyl maleate, dibutyl maleate, diamyl maleate, dihexyl maleate, diheptyl maleate, dioctyl maleate, dimethyl fumarate, diethyl fumarate, dipropyl fumarate, dibutyl fumarate and the like.

The effective phosphoric acid ester used in this invention includes tributyl phosphate, triamyl phosphate, trihexyl phosphate, trioctyl phosphate, tributoxyethyl phosphate, trichloroethyl phosphate and the like.

In the case of the amount more than 10% of an aliphatic acid ester, an aliphatic dibasic acid ester or phosphoric acid ester to be used in the ink, the viscosity of the ink becomes low, printing properties may be harmed and further improved effect cannot be obtained.

The ink composition of this invention also can contain another vehicle resins used in the conventional lithographic printing ink, such as phenolic resin, rosin-modified phenolic resin, alkyd resin, rosin ester resin, hydrocarbon resin and maleic resin and the like with specified polybutadiene-modified resins. Drying or semi-drying oils may be used such as linseed oil, tung oil and safflower oil and the like. Common high-boiling petroleum solvent mixture having a boiling point between 200 and 350°C may be used as a mineral oil.

In order to prevent the so-called scumming or greasing that may be formed in non-image areas when the temperature of the printing plate increases during a continuous printing operation, it is most effective to use a high boiling petroleum solvent mixture in which the aromatic components account for no more than 5 vol. % of the total contents.

Various conventional inorganic and organic pigments including extender pigment may also be used, as a coloring material or extender. Further, well-known additives used in the conventional lithographic printing ink may be used, for example; waxes such as paraffin wax, amide wax, montan wax, carnauba wax, and the like; dryer such as metal soap of cobalt, manganese or lead of naphthenic acid or octanoic acid; an anti-skinning agent; anti-offset agent; and the like.

An ink composition can be produced from the so prepared varnish by grinding and dispersing a coloring material in the varnish in a conventional manner, and adding aforementioned additives such as wax, drying, and extender pigment if necessary.

When a printing ink composition according to the present invention is used for a printing operation, printing can be performed by a sheet-fed or web-fed lithographic printing process utilizing a waterless lithographic plate and use of a fountain solution is not required.

It is to be noted that the printing ink composition of the present invention can be directly applied not only in the case of a waterless lithographic printing process but also in the case of a conventional lithographic system which utilizes a fountain solution. It exhibits superior stability with respect to a fountain solution even under these printing conditions.

This invention is described in more detail by reference to the following examples which are given here for examples only and are by no means intended to limit the scope of the invention.

Examples

Synthesis Example 1 for Varnish

40 parts by weight of a rosin ester resin (Pentaline K, manufactured by Hercules Inc.), and 8 parts by weight of polybutadiene B-3000, (manufactured by Nippon Sekiyu Kagaku Co. Ltd.), (number average molecular weight: 3,000) were mixed with a petroleum-based solvent, #6 solvent, (manufactured by Nippon Sekiyu Co. Ltd.), and heated at 230°C for 30 minutes. 0.5 parts by weight of ditertiary butyl peroxide was then added to the resulting molten product and polymerized the polybutadiene at 160°C for about one hour to give a desired modified resin, 30 parts by weight of #6 solvent was then added to the modified resin to produce a polybutadiene varnish A.

Synthesis Examples 2 to 8 for Varnish

Polybutadiene modified resins were produced by following the same procedure as that taken in Synthesis Example 1 and in accordance with Table 1. The so produced resins were similarly mixed with #6 solvent to produce polybutadiene varnishes B to G. In Synthesis Example 8, 2 parts by weight of butyl oleate were further added to the reaction system to produce a polybutadiene varnish H.

Table 1

| Names of varnishes | B | C | D | E | F | G | H |
|---|---|---|---|---|---|---|---|
| rosin-modified phenol resin (Tamanol 361, manufactured by Arakawa Kagaku Co. Ltd.) | - | - | - | 40 | - | - | - |
| rosin ester resin (Pentalin K, manufactured by Hercules Inc.) | 40 | 40 | 40 | - | - | - | 40 |
| rosin-modified maleic acid resin (Marquid #5, manufactured by Arakawa Kagaku Co., Ltd.) | - | - | - | - | 40 | - | - |
| alkyd resin (Peccol EL-8011, manufactured by Dainippon Ink Co. Ltd.) | - | - | - | - | - | 50 | - |
| polybutadiene (B-3000, manufactured by Nippon Sekiyu Kagaku Co., Ltd.; MW = 3000) | 8 | - | - | 8 | 8 | 8 | 8 |
| maleinated polybutadiene (M-1000-20, manufactured by Nippon Sekiyu Kagaku Co., Ltd.; MW = 1000; degree of modification, 0.31 to 2.3 mol/mol) | - | 8 | - | - | - | - | - |
| epoxidated polybutadiene (E-1000-3.5, manufactured by Nippon Sekiyu Kagaku Co. Ltd.; MW = 1000; degree of modification, 2.1 to 2.3 mol/mol) | - | - | - | - | - | - | - |
| acrylated polybutadiene (MW-1000-8, manufactured by Nippon Sekiyu Kagaku Co. Ltd.; MW = 1000; degree of modification, 1.5 to 1.7 mol/mol) | - | - | 8 | - | - | - | - |
| #6 solvent | 15 | 15 | 15 | 15 | 15 | 15 | 15 |
| melting temperature, °C (melting time, -- minutes) | 230(30) | 230(30) | 230(30) | 230(30) | 170(30) | 100(10) | 230(30) |
| reaction temperature, °C (reaction time, -- minutes) | 160(60) | 160(60) | 160(60) | 160(60) | 160(60) | 160(60) | 160(60) |

Comparative Synthetic Examples 1 and 2 for Varnishes

A varnish I and a varnish J were prepared in accordance with Table 2 as Comparative Synthesis Examples for Varnishes. Aluminium chelate, as a gellating agent was used in the synthesis of varnish I.

Table 2

| Names of varnishes | I | J |
|---|---|---|
| rosin-modified phenol resin | | |
|    Tespol 271 (manufactured by Hitachi Kasei Co. Ltd.) | 35 | - |
|    Tamanol 316 | - | 45 |
| linseed oil | 10 | 10 |
| #6 solvent | 55 | 45 |
| aluminium chelate | 0.7 | - |
| melting temperature (melting time, -- minutes) | 260°C (30 minutes) | 230°C (30 minutes) |
| reaction temperature (reaction time, -- minutes) | 160°C (60 minutes) | - |

Examples 1 to 8 and Comparative Examples 1 and 3

Using polybutadiene varnishes A to G obtained in the above Varnish Synthesis Examples 1 to 7 and the Comparative Varnish Synthesis Examples 1 and 2, blue and yellow inks A to G (Examples 1 to 7) and ink I (Comparative Example 1) having the following compositions were produced in the conventional manner.

| | indigo blue ink parts by weight | yellow ink parts by weight |
|---|---|---|
| pigment | 20 | 11 |
| varnish | 55 | 65 |
| alkyd resin (Deckosol EL-8011) | 5 | 3 |
| #6 solvent | 18.6 | 20 |
| drier | 1.4 | 1 |
| | 100 | 100 |

In preparing ink K (Example 8), a varnish composition consisting of 5 parts by weight of polybutadiene varnish A and the balance varnish I was used in the ink composition.

In preparing ink J (Comparative Example 2), a 50:50 varnish mixture of varnishes I and J was used in the ink composition and 2.0 parts by weight of silicone oil KF-96, manufactured by Shin-Etsu Silicone Co. Ltd., was additionally employed in the ink composition.

In preparing ink L (Comparative Example 3), a 50:50 varnish mixture of varnishes I and J was used in the ink composition and 5.0 parts by weight of polybutadiene B-3000 was additionally employed in the ink composition.

Printing Test 1

A printing test was performed using blue ink (A to G and K) and yellow ink (A to G and K) prepared as in Examples 1 to 8 and Comparative Examples 1 to 3. Printing was carried out on coated paper by means of a printing machine with a waterless lithographic printing plate (product of Toray Industries, Inc.), a printing cylinder of said printing machine being provided with a sheet heater so that the temperature of the printing cylinder can be easily raised.

At a predetermined beta concentration for blue of 1.55 as measured on a densitometer manufactured by Macbeth Inc., the temperature on the plate surface at the time when ground contamination (so called scumming) occurred on the non-image areas of the printed matter was evaluated as the ground contamination temperature.

The gloss of a printed material measured with a gloss meter was evaluated.

A material printed with blue ink was allowed to stand for 24 hours, and was then overcoated with yellow ink. The dry trapping and transfer characteristics of the ink on the printed material were evaluated.

The results are shown in the following Table 3.

Table 3

| | | ground contamination temperature (°C) | gloss | transfer charac- teristics | dry trapping |
|---|---|---|---|---|---|
| Example | ink | | | | |
| 1 | A | 37 | 46 | excellent | excellent |
| 2 | B | 37 | 50 | " | " |
| 3 | C | 37 | 48 | " | " |
| 4 | D | 37 | 49 | " | " |
| 5 | E | 38 | 45 | " | " |
| 6 | F | 38 | 45 | " | " |
| 7 | G | 36 | 50 | " | " |
| 8 | K | 38 | 45 | good | good to excellent |
| Comparative Example | | | | | |
| 1 | I | 38 | 37 | inferior | good |
| 2 | J | 37 | 45 | good | inferior |
| 3 | L | 33 | 35 | good | good |

Examples 9 to 14

Using polybutadiene varnish H produced in Varnish Synthesis Example H, blue and yellow inks were produced from the same composition as in Example 1 in a similar manner to Example 1.

On the other hand, 1 part by weight of the alkyd resin in the ink compositions of the inks A, B and K in Examples 1, 2 or 8 was replaced with butyl oleate to produce inks A-1, B-1 and K-1 (Examples 10, 11 and 12).

Also, butyl oleate was replaced in ink A-1 of Example 10 with dibutyl sebacinate and tributyl phosphate to produce inks A-2 and A-3 (Examples 13 and 14).

Printing Test 2

Printing and evaluation tests were carried out in a similar manner to that of printing test 1 on the samples of inks H, A-1, B-1, K-1, A-2 and A-3 produced in Examples 9 to 14. The results are shown in

Table 4.

## Table 4

| | | ground contamination temperature (°C) | gloss | transfer charac- teristics | dry trapping |
|---|---|---|---|---|---|
| Example | ink | | | | |
| 9 | H | 38 | 48 | excellent | excellent |
| 10 | A-1 | 37 | 48 | " | " |
| 11 | B-1 | 37 | 52 | " | " |
| 12 | K-1 | 38 | 47 | good to excellent | excellent |
| 13 | A-2 | 38 | 48 | excellent | " |
| 14 | A-3 | 38 | 48 | " | " |

Effects

From the foregoing it will be seen that the ink composition of the present invention which utilizes polybutadiene-modified resins as the varnish component shows an excellent performance in terms of gloss and transfer properties and trapping as compared with the conventional ink I which exhibited increased cohesive force and an elevated ground contamination temperature, and that the ink composition of the present invention is also superior in terms of transfer properties and trapping compared to the conventional ink J while being comparable in terms of ground contamination adaptability, the latter exhibiting an elevated ground contamination temperature, on account of the addition of silicone compounds.

The ink K which employs a polybutadiene varnish in an amount of 5% in relation to the ink or 2.4% in relation to the resin shows effects consistent with the addition of the polybutadiene-modified resin specified by the present invention and is superior to the conventional inks I and J.

When tests were conducted using (1) an ink employing a specified polybutadiene-modified resin obtained upon heating and reacting polybutadiene and a rosin modified phenol resin, such as ink A (Example 1), and (2) an ink obtained by simply mixing polybutadiene and a rosin modified phenol resin, such as ink L (Comparative Example 3), the latter was found to be inferior with respect to all of the aspects evaluated, and hence is seen to be unsuited to use in dry lithography.

The ink containing a polybutadiene varnish according to the present invention and also containing a specified ester exhibits even better gloss, transfer and dry trapping properties, from the foregoing Examples 9 to 14.

The above described ink composition for waterless lithographic printing according to the present invention has superior gloss, transfer properties and adaptability to trapping, while exhibiting a higher ground contamination temperature.

Examples 15 to 17

The total amount of #6 solvent, which is a mineral oil used in the formulation of ink A-1 used in Example 1, was replaced by the following: (1) Dialen 168, manufactured by Mitsubishi Chemical Industries Co. (Example 19, ink A-4); (2) PKWF 6/9 AF, manufactured by Johann Hartmann GMBH (Example 16, ink A-5); and (3) #0 solvent manufactured by Nippon Sekiyu Co. Ltd. (Example 17, ink A-6); and each was prepared as an ink.

## Printing Test 3

Printing and evaluation tests were carried out in a similar manner to that of printing test 1 on the samples of inks A-4, A-5 and A-6 produced in Examples 15 to 17. The results are shown in Table 5.

Table 5

| | | ground contamination temperature (°C) | gloss | transfer characteristics | dry trapping |
|---|---|---|---|---|---|
| Example | ink | | | | |
| 15 | A-4 | 42 | 48 | excellent | excellent |
| 16 | A-5 | 42 | 48 | " | " |
| 17 | A-6 | 43 | 48 | " | " |

## Printing Test 4

Inks A-1 (obtained in Example 10); B-1 (obtained in Example 11); J (obtained in Comparative Example 2) and J-1 (obtained in Comparative Example 4), a version of ink J containing no silicone oil (corresponding to the conventional ink for lithographic printing which makes use of a fountain solution) were used in conjunction with a PS plate, SMP, manufactured by Konika Co., Ltd., as the printing plate, and SLH (an ordinary acidic fountain solution manufactured by SAKATA INX Corp.) to performing operation. The tolerance to fountain solution, gloss, transfer characteristics and dry trapping properties were evaluated. The results are shown in Table 6.

Table 6

| | | tolerance to fountain solution | gloss | transfer characteristics | dry trapping |
|---|---|---|---|---|---|
| Example | ink | | | | |
| 10 | A-1 | excellent | 48 | excellent | excellent |
| 11 | B-1 | " | 52 | " | " |
| Comparative Example | | | | | |
| 2 | J | good | 45 | inferior | inferior |
| 4 | J-1 | good | 49 | excellent | excellent |

## Effects

It can be seen from printing test 3 that scumming etc. may be prevented by the use of a solvent free from aromatic compounds even if the plate temperature increases.

It can also be seen from printing test 4 that the ink according to the present invention can be directly used in a normal lithographic printing operation and that it exhibits superior printing properties.

**Claims**

1. An ink composition for lithography consisting essentially of from 2 to 40 percent by weight of a vehicle resin, from 5 to 25 percent by weight of a drying or semi-drying oil, from 15 to 45 percent by weight of a mineral oil and from 1 to 40 percent by weight of a coloring material, characterised in that said vehicle resin comprises a polybutadiene modified resin, said polybutadiene modified resin being produced by polymerization of polybutadiene in a resin solution under-mentioned, under heating, 5 to 50 parts by weight of polybutadiene or modified polybutadiene having a number average molecular weight of 100 to 100,000, with 100 parts by weight of at least one resin selected from the group consisting of rosin modified phenol resin, rosin ester resin, rosin modified maleic acid resin, alkyd resin and hydrocarbon resin.

2. An ink composition for lithography according to claim 1, wherein the modified polybutadiene is selected from the group consisting of maleinated polybutadiene, epoxidated polybutadiene and acrylated polybutadiene.

3. An ink composition for lithography according to claim 1, wherein not more than 10 percent by weight of said drying or semi-drying oil on the basis of the total weight of the ink composition is replaced by a member selected from the group consisting of an aliphatic acid ester, an aliphatic dibasic acid ester, a phosphoric acid ester and a mixture thereof, said member having a boiling point higher than 200°C, a coagulating point below -5°C.

4. An ink composition for lithography according to claim 1, wherein all or a part of said mineral oil comprises high-boiling petroleum solvent mixture having a boiling point higher than 200°C, and contains no more than 5% by volume of aromatic components.

5. A printing method of lithography comprising putting the ink composition according to claims 1 to 4 on waterless lithographic printing plate in the absence of any kind of fountain system to mask the non-image area of said plate, and transferring the ink to a printing material.

6. A printing method of lithography comprising putting the ink composition according to claims 1 to 4 on lithographic printing plate in the presence of any kind of fountain system to mask the non-image area of said plate, and transferring the ink to a printing material.

**Patentansprüche**

1. Druckfarbe für die Lithographie, bestehend im wesentlichen aus 2 bis 40 Gew.-% eines Trägerharzes, 5 bis 25 Gew.-% eines trocknenden oder halbtrocknenden Öls, 15 bis 45 Gew.-% eines Mineralöls und 1 bis 40 Gew.-% eines färbenden Materials, dadurch gekennzeichnet, daß das Trägerharz ein polybutadienmodifiziertes Harz, das durch Polymerisation von Polybutadien in einer Harzlösung mit 5 bis 50 Gewichtsteilen Polybutadien oder eines modifizierten Polybutadiens eines Zahlenmittelmolekulargewichts von 100 bis 100 000 und 100 Gewichtsteilen mindestens eines Harzes aus der Gruppe kolophoniummodifiziertes Phenolharz, Kollophoniumesterharz, kolophoniummodifiziertes Maleinsäureharz, Alkydharz und Kohlenwasserstoffharz unter Erwärmen hergestellt wurde, umfaßt.

2. Druckfarbe für die Lithographie nach Anspruch 1, wobei das modifizierte Polybutadien aus der Gruppe maleiniertes Polybutadien, epoxydiertes Polybutadien und acryliertes Polybutadien ausgewählt ist.

3. Druckfarbe für die Lithographie nach Anspruch 1, wobei nicht mehr als 10 Gew.-% des trocknenden oder halbtrocknenden Öls, bezogen auf das Gesamtgewicht der Druckfarbe, durch eine Komponente aus der Gruppe aliphatischer Säureester, aliphatischer zweibasiger Säureester, Phosphorsäureester und ein Gemisch derselben, eines Kp von über 200°C und eines Koagulationspunkts unter -5°C ersetzt sind.

4. Druckfarbe für die Lithographie nach Anspruch 1, wobei das Mineralöl insgesamt oder teilweise aus einem hochsiedenden Erdöllösungsmittelgemisch eines Kp von über 200°C besteht und nicht mehr als 5 Volumenprozent an aromatischen Komponenten enthält.

**5.** Lithographisches Druckverfahren, umfassend das Aufbringen der Druckfarbe nach Ansprüchen 1 bis 4 auf eine wasserfreie lithographische Druckplatte in Abwesenheit jeglicher Art Wischsystem zur Maskierung der nicht-Bildbezirke der Platte und die Übertragung der Tinte bzw. Farbe auf ein Druckmaterial.

**6.** Lithographisches Druckverfahren, umfassend das Aufbringen der Druckfarbe nach Ansprüchen 1 bis 4 auf eine lithographische Druckplatte in Gegenwart irgendeines Wischsystems zur Maskierung der nicht-Bildbezirke auf der Platte und die Übertragung der Tinte bzw. Farbe auf ein Druckmaterial.

**Revendications**

**1.** Composition d'encre pour lithographie consistant essentiellement en 2 à 40 pour cent en poids d'un véhicule résineux, en 5 à 25 pour cent en poids d'une huile siccative ou semi-siccative, en 15 à 45 pour cent en poids d'une huile minérale, et en 1 à 40 pour cent en poids d'une matière colorante, caractérisée en ce que le véhicule résineux comprend une résine modifiée avec un polybutadiène, cette résine modifiée avec du polybutadiène, étant produite par polymérisation de polybutadiène dans une solution de résine décrite ci-dessous, par chauffage, de 5 à 50 parties en poids de polybutadiène ou de polybutadiène modifié ayant un poids moléculaire moyen en nombre de 100 à 100 000, avec 100 parties en poids d'au moins une résine choisie parmi une résine phénolique modifiée avec de la colophane, une résine d'ester de colophane, une résine d'acide maléique modifiée avec de la colophane, une résine alkyde et une résine hydrocarbonée.

**2.** Composition d'encre pour lithographie selon la revendication 1, dans laquelle le polybutadiène modifié est choisi parmi un polybutadiène à groupe maléate, un polybutadiène époxydé et un polybutadiène à groupe acrylate.

**3.** Composition d'encre pour lithographie selon la revendication 1, dans laquelle pas plus de 10 pour cent en poids de l'huile siccative ou semi-siccative par rapport au poids total de la composition d'encre, sont remplacés par un composant choisi parmi un ester d'acide aliphatique, un ester de diacide aliphatique, un ester d'acide phosphorique ou un mélange de ceux-ci, ce composant ayant un point d'ébullition supérieur à 200 °C et un point de coagulation inférieur à -5 °C.

**4.** Composition d'encre pour lithographie selon la revendication 1, dans laquelle la totalité ou une partie de l'huile minérale, comprend un mélange de solvants dérivés de pétrole à point d'ébullition élevé, ayant un point d'ébullition supérieur à 200 °C, et ne contenant pas plus de 5 pour cent en volume de composants aromatiques.

**5.** Procédé d'impression lithographique, selon lequel on dépose la composition d'encre des revendications 1 à 4 sur une plaque d'impression lithographique sans eau, en l'absence d'un quelconque système de mouillage, afin de masquer la zone sans image de la plaque, et on transfère l'encre sur une matière à imprimer.

**6.** Procédé d'impression lithographique, selon lequel on dépose la composition d'encre selon les revendications 1 à 4, sur une plaque d'impression lithographique, en présence d'un quelconque système de mouillage, afin de masquer la zone sans image de cette plaque, et on transfère l'encre sur une matière à imprimer.